# EUROPEAN PATENT APPLICATION

(11) **EP 4 156 656 A1**
(43) Date of publication of application: **29.03.2023**
(21) Application number: 21825840.8
(22) Date of filing: 23.04.2021
(51) Int. Cl.: H04M 1/02, H04N 5/225

(54) **ELECTRONIC DEVICE**

(30) Priority: 17.06.2020 CN 202021128362 U
(71) Applicant: GUANGDONG OPPO MOBILE TELECOMMUNICATIONS CORP., LTD., Dongguan, Guangdong 523860 (CN)
(72) Inventor: FAN, Hao, Dongguan, Guangdong 523860 (CN); LI, Xiaoming, Dongguan, Guangdong 523860 (CN)
(74) Representative: Trichard, Louis
(86) International application number: PCT/CN2021/089342
(87) International publication number: WO 2021/253982

(57) **Abstract**

An electronic device is provided in the present disclosure. The electronic device has an imaging region and an auxiliary display region connected with the imaging region. The imaging region is disposed around at least a part of a periphery of the auxiliary display region. The electronic device includes a main display screen and an auxiliary display screen disposed opposite to the main display screen, and the auxiliary display screen is disposed corresponding to the auxiliary display region. For the electronic device in the present disclosure, the auxiliary display region and the imaging region can be integrated by connecting the imaging region with the auxiliary display region. Meanwhile, the imaging region is disposed around at least the part of the periphery of the auxiliary display region, so that the auxiliary display region can be better integrated with the imaging region, thus improving integration of the auxiliary display region and the imaging region. Especially when the auxiliary display screen is in an off-state, the user is unable to clearly distinguish specific positions of the auxiliary display region and the imaging region, which can effectively improve integrity of appearance of the electronic device. In addition, because the auxiliary display region is integrated with the imaging region in the present disclosure, more assembly space can be reserved inside the electronic device, thus improving space utilization of the electronic device.

## Description

### TECHNICAL FIELD

The disclosure relates to the field of electronic product technology, and in particular to an electronic device.

### BACKGROUND

With continuous development of electronic devices, the electronic devices are popular among users because of their portability and rich operability. At the same time, expectations and requirements of users for the electronic devices are become increasingly higher. For example, the existing electronic device already has a main display screen on one side of the electronic device, and on this basis, some manufacturers additionally set an auxiliary display screen on the other side of the electronic device to meet various needs of users. However, the auxiliary display screen may be disposed discordantly, and is not well integrated with the camera, resulting in low integration of the auxiliary display screen and the camera.

### SUMMARY

In view of this, an electronic device is provided in a first aspect of the present disclosure. The electronic device has an imaging region and an auxiliary display region connected with the imaging region. The imaging region is disposed around at least a part of a periphery of the auxiliary display region. The electronic device includes a main display screen and an auxiliary display screen disposed opposite to the main display screen, and the auxiliary display screen is disposed corresponding to the auxiliary display region.

An electronic device is provided in a second aspect of the present disclosure, which includes a main display screen, an auxiliary display screen, and multiple cameras. The auxiliary display screen is disposed opposite to the main display screen, and the multiple cameras are disposed around a periphery of the auxiliary display screen.

### BRIEF DESCRIPTION OF THE DRAWINGS

In order to describe technical schemes in implementations of the present disclosure more clearly, accompanying drawings required for describing the implementations of the present disclosure will be explained in the following.
FIG. 1 is a side view of an electronic device provided in an implementation of the present disclosure.
FIG. 2 is a schematic structural view of an imaging region and an auxiliary display region of the electronic device provided in an implementation of the present disclosure.
FIG. 3 is a schematic structural view of an imaging region and an auxiliary display region of the electronic device provided in another implementation of the present disclosure.
FIG. 4 is a schematic structural view of an imaging region and an auxiliary display region of the electronic device provided in yet another implementation of the present disclosure.
FIG. 5 is a schematic structural view of an imaging region and an auxiliary display region of the electronic device provided in yet another implementation of the present disclosure.
FIG. 6 is an exploded view of an electronic device provided in an implementation of the present disclosure.
FIG. 7 is an exploded schematic view of a main-board bracket and an auxiliary display screen provided in an implementation of the present disclosure.
FIG. 8 is an exploded schematic view of a main-board bracket and an auxiliary display screen provided in another implementation of the present disclosure.
FIG. 9 is an exploded schematic view of a main-board bracket and an auxiliary display screen provided in another implementation of the present disclosure.
FIG. 10 is an exploded schematic view of a main-board bracket and an auxiliary display screen provided in yet another implementation of the present disclosure.
FIG. 11 is an exploded schematic view of a main-board bracket and an auxiliary display screen provided in yet another implementation of the present disclosure.
FIG. 12 is an exploded view of an electronic device provided in another implementation of the present disclosure.
FIG. 13 is an exploded view of an electronic device provided in yet another implementation of the present disclosure.
FIG. 14 is a partial schematic structural view of an electronic device provided in an implementation of the present disclosure.
FIG. 15 is an exploded view of an electronic device provided in yet another implementation of the present disclosure.
FIG. 16 is a schematic cross-sectional view of an electronic device provided in an implementation of the present disclosure.
FIG. 17 is a schematic cross-sectional view of an electronic device provided in another implementation of the present disclosure.
FIG. 18 is an exploded view of an electronic device provided in yet another implementation of the present disclosure.
FIG. 19 is a partial schematic structural view of an electronic device provided in an implementation of the present disclosure.
FIG. 20 is a partial schematic structural view of an electronic device provided in another implementation of the present disclosure.
FIG. 21 is an overall structural view of an electronic device provided in an implementation of the present disclosure.
FIG. 22 is a partial cross-sectional view taken along an X-X direction in FIG. 21.
FIG. 23 is an exploded view of an electronic device provided in yet another implementation of the present disclosure.
FIG. 24 is an exploded view of an electronic device provided in yet another implementation of the present disclosure.
FIG. 25 is an exploded view of an electronic device provided in yet another implementation of the present disclosure.
FIG. 26 is an exploded view of an electronic device provided in yet another implementation of the present disclosure.
FIG. 27 is an exploded view of an electronic device provided in yet another implementation of the present disclosure.
FIG. 28 is an exploded view of an electronic device provided in yet another implementation of the present disclosure.

Description of reference signs: electronic device -1, functional region -2, appearance region -3, imaging region -4, auxiliary display region -5, main display region -6, light incident region -7, accommodating region -8, main display screen -10, auxiliary display screen -11, auxiliary-display-screen body -12, electrical connection portion -13, display portion -14, non-display portion -15, frame -20, camera -21, main board -22, main-board bracket -30, first installation region -31, second installation region -32, installation groove -33, first through-hole -34, installation hole - 35, fixing portion -36, fixing groove -37, rear housing -40, second through-hole -41, camera trim piece -42, third through-hole -43, fourth through-hole -44, first seal-bond -45, blocking portion -46, lens -50, first light-transmitting portion -51, second light-transmitting portion -52, first light-transmitting sub-portion- 521, second light-transmitting sub-portion -522, non-light-transmitting portion -53, bond -54, light-shielding layer -55, and second seal-bond -56.

### DETAILED DESCRIPTION

The following are preferred implementations of the present disclosure. It is noted that several improvements and modifications can be made by those of ordinary skill in the art without departing from the principle of the present disclosure, which also fall within the protection scope of the present disclosure.

An electronic device is provided in the present disclosure. The electronic device has an imaging region and an auxiliary display region connected with the imaging region, the imaging region being disposed around at least a part of a periphery of the auxiliary display region; and the electronic device includes a main display screen and an auxiliary display screen disposed opposite to the main display screen, and the auxiliary display screen is disposed corresponding to the auxiliary display region.

In an implementation, the imaging region surrounds an accommodating region, and the auxiliary display region is disposed in the accommodating region.

In an implementation, the imaging region includes a light incident region, and the light incident region and the auxiliary display region are same in shape.

In an implementation, the electronic device further includes: a frame and a camera, the camera being disposed corresponding to the imaging region; and a main-board bracket installed on the frame, where the main-board bracket has a first installation region and a second installation region; and the auxiliary display screen is installed in the first installation region and the camera is installed in the second installation region.

In an implementation, the main-board bracket defines an installation groove, the installation groove serving as the first installation region; or, the main-board bracket defines an installation hole, the installation hole serving as the first installation region.

In an implementation, when the main-board bracket defines the installation groove, at least part of the auxiliary display screen is installed in the installation groove.

In an implementation, the electronic device further includes a main board installed on the frame, where the auxiliary display screen includes an auxiliary-display-screen body received in the installation groove and an electrical connection portion connected with the auxiliary-display-screen body; and the main-board bracket further defines a first through-hole communicating with the installation groove, and the electrical connection portion passes through the first through-hole and is electrically connected with the main board.

In an implementation, when the main-board bracket defines the installation hole, a fixing portion protrudes from a side wall of the installation hole defined by the main-board bracket, and the auxiliary display screen is installed on the fixing portion.

In an implementation, when the main-board bracket defines the installation hole, a fixing groove is defined in a side wall of the installation hole defined by the main-board bracket, and part of the auxiliary display screen is received in the fixing groove.

In an implementation, the auxiliary display screen includes a display portion and a non-display portion disposed around a periphery of the display portion, and at least part of the non-display portion is received in the fixing groove.

In an implementation, the electronic device further includes: a rear housing installed on the frame, where the rear housing defines a second through-hole, the second through-hole serving as the imaging region and the auxiliary display region connected with the imaging region; and a camera trim piece disposed between the main-board bracket and the rear housing, where the camera trim piece is disposed corresponding to the second through-hole, and the camera trim piece defines a third through-hole corresponding to the auxiliary display screen and a fourth through-hole corresponding to the camera.

In an implementation, the camera trim piece is installed on the main-board bracket; or, the camera trim piece is installed on the rear housing.

In an implementation, when the camera trim piece is installed on the rear housing, the electronic device further includes a first seal-bond, the first seal-bond bonding the rear housing with the camera trim piece.

In an implementation, the electronic device further includes a blocking portion disposed between the main-board bracket and the camera trim piece, the auxiliary display screen being disposed at one side of the blocking portion and the camera being disposed at an opposite side of the blocking portion.

In an implementation, the electronic device further includes a lens connected with the camera trim piece, where the lens includes a first light-transmitting portion, a second light-transmitting portion, and a non-light-transmitting portion connecting the first light-transmitting portion with the second light-transmitting portion, the first light-transmitting portion being disposed corresponding to the auxiliary display screen and the second light-transmitting portion being disposed corresponding to the camera.

In an implementation, the electronic device further includes a light-shielding layer disposed corresponding to a periphery of the second light-transmitting portion, the light-shielding layer close to the first light-transmitting portion having a thickness greater than the light-shielding layer away from the first light-transmitting portion.

In an implementation, the second light-transmitting portion includes a first light-transmitting sub-portion and a second light-transmitting sub-portion, the first light-transmitting sub-portion being closer to the first light-transmitting portion than the second light-transmitting sub-portion; and the electronic device further includes a light-shielding layer disposed corresponding to a periphery of the second light-transmitting portion, the light-shielding layer corresponding to a periphery of the first light-transmitting sub-portion having a thickness greater than the light-shielding layer corresponding to a periphery of the second light-transmitting sub-portion.

In an implementation, the electronic device further includes a second seal-bond, the second seal-bond bonding the auxiliary display screen with the lens.

In an implementation, the electronic device further includes a frame and a camera, the camera being disposed corresponding to the imaging region; a rear housing installed on the frame, where the rear housing defines a second through-hole, the second through-hole serving as the imaging region and the auxiliary display region connected with the imaging region; and a camera trim piece disposed between the frame and the rear housing, where the camera trim piece has a first installation region and a second installation region; the auxiliary display screen is disposed in the first installation region, and the camera is disposed in the second installation region.

In an implementation, the camera trim piece is installed on the frame; or, the camera trim piece is installed on the rear housing.

In an implementation, the electronic device further includes a lens connected with the camera trim piece, where the lens includes a first light-transmitting portion, a second light-transmitting portion, and a non-light-transmitting portion connecting the first light-transmitting portion with the second light-transmitting portion; and the first light-transmitting portion is disposed corresponding to the auxiliary display screen, the second light-transmitting portion is disposed corresponding to the camera, and the first light-transmitting portion is detachably connected with the non-light-transmitting portion.

An electronic device is further provided in the present disclosure, including a main display screen, an auxiliary display screen, and a plurality of cameras, where the auxiliary display screen is disposed opposite to the main display screen, and the plurality of cameras are disposed around a periphery of the auxiliary display screen.

In an implementation, the electronic device further includes a frame, a main board, and a main-board bracket, where the frame supports the main display screen, the main board and the main-board bracket are disposed at one side of the frame away from the main display screen, the main-board bracket is connected with the main board and the frame, and the auxiliary display screen and the plurality of cameras are fixed to the main-board bracket.

In an implementation, the electronic device further includes a frame, a main board, a camera trim piece, and a rear housing, where the frame supports the main display screen; and the main board, the camera trim piece, and the rear housing are disposed at one side of the frame away from the main display screen, the main board and the rear housing are disposed on the frame, the camera trim piece is disposed between the frame and the rear housing, and the auxiliary display screen and the plurality of cameras are fixed to the camera trim piece.

In an implementation, the electronic device further includes a lens connected with the camera trim piece, where the lens includes a first light-transmitting portion, a second light-transmitting portion, and a non-light-transmitting portion connecting the first light-transmitting portion with the second light-transmitting portion; and the first light-transmitting portion is disposed corresponding to the auxiliary display screen, the second light-transmitting portion is disposed corresponding to the camera, and the first light-transmitting portion is detachably connected with the non-light-transmitting portion.

Before introducing technical schemes of the present disclosure, technical problems in the related art will be introduced in detail below.

Generally, the electronic device only has a main display screen at a front side of the electronic device, but some manufacturers may additionally set an auxiliary display at a back side of the electronic device, that is, the main display and the auxiliary display are disposed opposite to each other. In this way, the auxiliary display screen alone or in combination with the main display screen can meet more requirements of users. However, both the auxiliary display screen and an imaging region including multiple cameras are disposed on the back of electronic device. At present, an auxiliary display region corresponding to the auxiliary display screen and the imaging region corresponding to the cameras are usually disposed apart from each other, and the auxiliary display region has a relatively large size. Therefore, the auxiliary display screen may be disposed discordantly, and is not well interpreted with the imaging region, resulting in low integration of the auxiliary display region and the imaging region. Especially when the auxiliary display screen is in an off-state, both the auxiliary display screen and the cameras are black, on the other hand, a housing of the electronic device is usually colorful, therefore, the auxiliary display screen does not harmonize on the back of the electronic device and is not well integrated with the cameras and the electronic device body, thus leading to a poor appearance performance of the whole device. In addition, because the cameras and the auxiliary display screen are disposed separately, the cameras and the auxiliary display screen each occupy a certain assembly space inside the electronic device, which will waste the assembly space inside the electronic device and reduce space utilization of the electronic device.

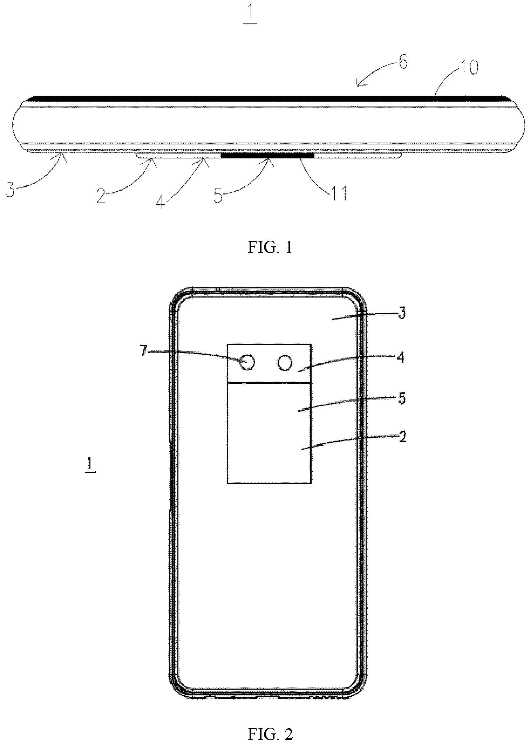

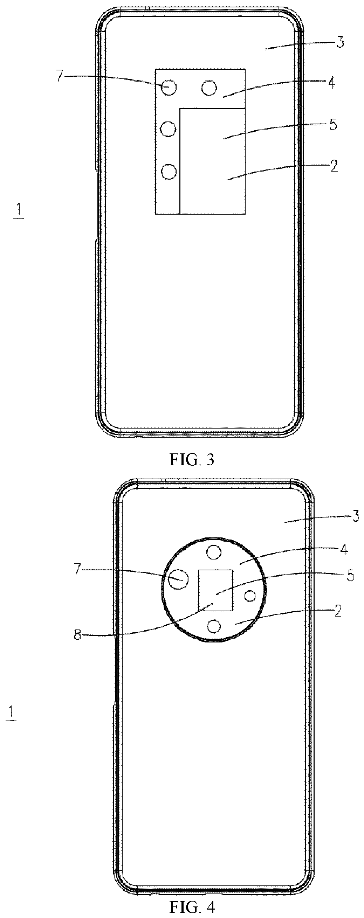

In view of this, in order to solve above problems, an electronic device is provided in the present disclosure. Reference is made to FIGS.1 to 4 together. FIG. 1 is a side view of an electronic device provided in an implementation of the present disclosure. FIG. 2 is a schematic structural view of an imaging region and an auxiliary display region of the electronic device provided in an implementation of the present disclosure. FIG. 3 is a schematic structural view of an imaging region and an auxiliary display region of the electronic device provided in another implementation of the present disclosure. FIG. 4 is a schematic structural view of an imaging region and an auxiliary display region of the electronic device provided in yet another implementation of the present disclosure. An electronic device 1 is provided in this implementation. The electronic device 1 has an imaging region 4 and an auxiliary display region 5 connected with the imaging region 1. The imaging region 4 is disposed around at least a part of a periphery of the auxiliary display region 5. The electronic device 1 includes a main display screen 10 and an auxiliary display screen 11 disposed opposite to the main display screen 10, and the auxiliary display screen 11 is disposed corresponding to the auxiliary display region 5.

The electronic device 1 in the present disclosure includes, but is not limited to, a mobile terminal such as a mobile phone, a tablet computer, a notebook computer, a palmtop computer, a personal computer (PC), a personal digital assistant (PDA), a portable media player (PMP), a navigation device, a wearable device, a smart band, and a pedometer, and a fixed terminal such as a digital TV, a desktop computer and the like. In this implementation, the mobile phone is taken as an example of the electronic device 1 for illustration.

The electronic device 1 in the present disclosure includes a main display screen 10 and an auxiliary display screen 11. The main display screen 10 is a display screen of the electronic device 1 used for main display, and the main display screen 10 is disposed corresponding to the main display region 6. Compared with the main display screen 10, the auxiliary display screen 11 is mainly used for auxiliary display, or displays some simple information individually. The auxiliary display screen 11 is disposed opposite to the main display screen 10. For example, the main display screen 10 is disposed at the front side of the electronic device 1, while the auxiliary display screen 11 is disposed at the back side of the electronic device 1. Generally, on the back of the electronic device 1 (i.e. a housing of the electronic device 1), an appearance region 3 and a functional region 2 connected with the appearance region 3 exist. The appearance region 3 mainly serves as the appearance, and the appearance region 3 can have various colors. Various functions such as imaging or displaying are mainly realized in the functional region 2. The functional region 2 includes an imaging region 4 and an auxiliary display region 5 connected with the imaging region 4. The imaging region 4 mainly serves as an imaging zone of the electronic device 1, and the auxiliary display region 5 corresponds to the auxiliary display screen 11 and is mainly configured for display. In the present disclosure, the auxiliary display region 5 is connected with the imaging region 4, so that the auxiliary display region 5 can be effectively integrated with the imaging region 4, and thus the separate auxiliary display region 5 does not harmonize with the separate imaging region 4, thus further improving integration of the auxiliary display region 5 and the imaging region 4.

In addition, in this implementation, the imaging region 4 can be disposed around at least a part of a periphery of the auxiliary display region 5, so that a practical display function can be realized, and the auxiliary display region 5 can be better integrated with the imaging region 4. Especially when the auxiliary display screen 11 is in the off-state, the imaging region 4 is usually black, and the auxiliary display screen 11 does not display any picture at this time and thus the auxiliary display screen 11 is also black, so the user is unable to distinguish the auxiliary display region 5 from the imaging region 4 clearly, and thus the imaging region 4 can be better integrated with the auxiliary display region 5, and the integration of the auxiliary display region 5 and the imaging region 4 can be improved. The electronic device 1 does not harmonize in appearance when viewed by a user. Further, when the auxiliary display screen is in the off-state, the user is unable to distinguish specific positions of the auxiliary display region and the imaging region clearly, which can effectively improve appearance performance of the electronic device. In addition, in the present disclosure, the auxiliary display region 5 is integrated with the imaging region 4, that is, the auxiliary display screen 11 is integrated with the camera 21, which can make the auxiliary display screen 11 cooperate with the camera 21 more closely in space, thus reducing space occupied by the auxiliary display screen 11 and the camera 21 in the electronic device 1, reserving more assembly space in the electronic device 1, and improving space utilization of the electronic device.

Optionally, the imaging region 4 is disposed around at least a part of the periphery of the auxiliary display region 5. In other words, the imaging region 4 is disposed around a part of the periphery of the auxiliary display region 5, or the imaging region 4 is disposed around an entire periphery of the auxiliary display region 5. For example, the auxiliary display region 5 is rectangle. The auxiliary display region 5 can have other shapes. As illustrated in FIG. 2, the imaging region 4 can be disposed around peripheries of two sides of the auxiliary display region 5. The two sides of the auxiliary display region 5 may be two adjacent sides of the auxiliary display region 5 or two opposite sides of the auxiliary display region 5. Only two adjacent sides of the auxiliary display region 5 are illustrated in FIG. 2. Alternatively, as illustrated in FIG. 3, the imaging region 4 can be disposed around peripheries of three sides of the auxiliary display region 5. The three sides of the auxiliary display region 5 can be three adjacent sides of the auxiliary display region 5. Alternatively, as illustrated in FIG. 4, the imaging region 4 is disposed around the entire periphery of the auxiliary display region 5, that is, the imaging region 4 surrounds an accommodating region 8, and the auxiliary display region 5 is disposed in the accommodating region 8. When the imaging region 4 is disposed around the entire periphery of the auxiliary display region 5, it is equivalent that the auxiliary display region 5 is disposed inside the functional region 2 and the imaging region 4 is disposed close to the periphery of the functional region 2. In this way, the auxiliary display region 5 can be further integrated with the imaging region 4, so that the auxiliary display region 5 is not a separate region, but looks like a part of the imaging region 4 when the auxiliary display region 5 is in the off state, and the integration of the auxiliary display region 5 and the imaging region 4 can be further improved. In addition, the auxiliary display region 5 is disposed in the accommodating region 8, so that the integration of the auxiliary display region 5 and the imaging region 4 can be improved. It can be understood that when multiple cameras 21 are disposed in a ring arrangement, the accommodating region 8 in the middle becomes a wasted and useless space. In this implementation, in contrast, the auxiliary display region 5 is disposed corresponding to the accommodating region 8, so that the originally useless space is utilized, thus further reducing the space occupied by the auxiliary display screen 11 and the cameras 21 in the electronic device and improving the space utilization of the electronic device 1.

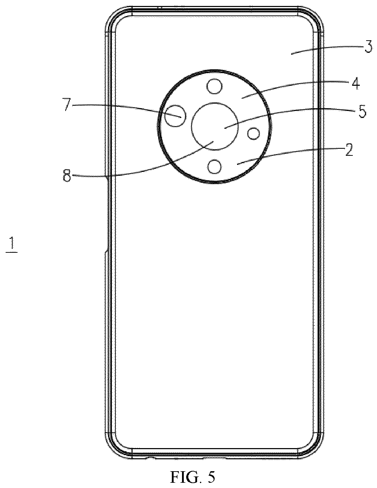

Reference is made to FIG. 5 together. FIG. 5 is a schematic structural view of an imaging region and an auxiliary display region of the electronic device provided in yet another implementation of the present disclosure. In this implementation, the imaging region 4 includes a light incident region 7, and the light incident region 7 and the auxiliary display region 5 are same in shape.

In this implementation, the imaging region 4 includes the light incident region 7, the light incident region 7 is configured to make external lights enter the electronic device 1 to be collected by the cameras 21. The light incident region 7 can be understood as a region corresponding to the camera 21. In this implementation, the light incident region 7 and the auxiliary display region 5 are same in shape. Optionally, the light incident region 7 is circular, and the auxiliary display region 5 is also designed to be circular, which can further integrate the auxiliary display region 5 with the imaging region 4, so that the auxiliary display region 5 does not appear to be a separate region, especially when the auxiliary display region 5 is in the off-state, the auxiliary display region 5 looks like the light incident region 7. On a basis of improving the integration of the auxiliary display region 5 and the imaging region 4, overall appearance performance of the electronic device 1 can be further improved, so that the electronic device 1 has good appearance.

A relationship between the auxiliary display region 5 and the imaging region 4 is introduced above, and in the following, a specific structure of the electronic device 1 in the above distribution relationship will be described in detail. Optionally, two specific implementations are provided in the present disclosure.

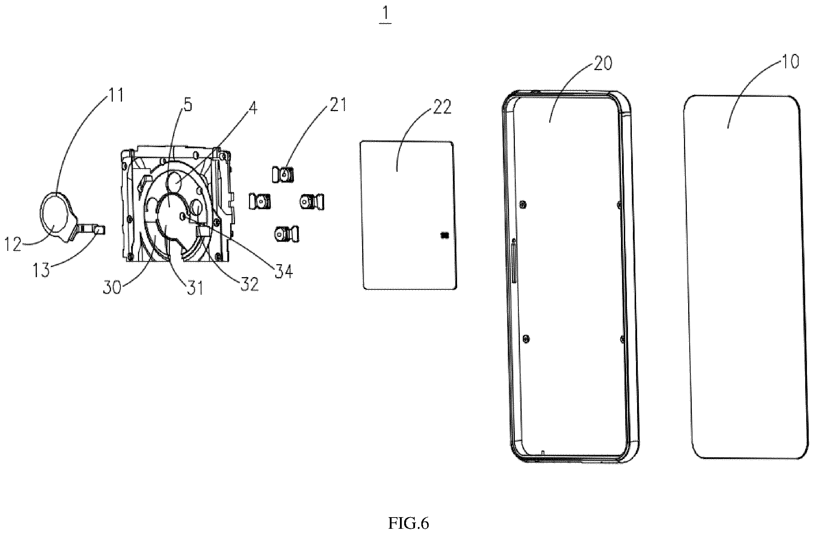

In one implementation, reference is made to FIG. 6. FIG. 6 is an exploded view of an electronic device provided in an implementation of the present disclosure. In this implementation, the electronic device 1 further includes a frame 20 and a camera 21, and a main-board bracket 30. The camera 21 is disposed corresponding to the imaging region 4. The main-board bracket 30 is installed on the frame 20. The main-board bracket 30 has a first installation region 31 and a second installation region 32. The auxiliary display screen 11 is installed in the first installation region 31 and the camera 21 are installed in the second installation region 32.

The electronic device 1 of this implementation may include the frame 20, the camera 21, and the main-board bracket 30. The frame 20 is a "skeleton" of the electronic device 1. The frame 20 can be used to support most structural components of the electronic device 1. For example, the main display screen 10 can be installed on the frame 20, and other structural components such as the main-board bracket 30, a rear housing 40, a main board 22, and a battery can also be installed on the frame 20. The camera 21 is mainly used for photographing and imaging, and the camera 21 are disposed corresponding to the imaging region 4. Optionally, the camera 21 can be disposed corresponding to the light incident region 7. Optionally, there may be multiple cameras 21.

In the disclosure, the main-board bracket 30 is further provided. The main-board bracket 30 is installed on the frame 20 to protect structural components installed on the main-board bracket 30 and the frame 20. When the user detaches the rear housing 40 from the frame 20 if the rear housing 40 is detachable, the main-board bracket 30 will be exposed, thus avoiding some important structural components installed on the frame 20 from being directly exposed. A part of the main-board bracket 30 can also be directly configured to form an antenna region for receiving and transmitting signals. In this implementation, the main-board bracket 30 may have the first installation region 31 and the second installation region 32, the auxiliary display screen 11 is installed in the first installation region 31, and the camera 21 is installed in the second installation region 32. Therefore, the auxiliary display screen 11 and the camera 21 are installed on the main-board bracket 30 and are in the above-mentioned structural relationship, and integration and space utilization are improved.

As for specific structures of the first installation region 31 and the second installation region 32, optionally, in this implementation, the main-board bracket 30 defines an installation groove 33, and the installation groove 33 serves as the first installation region 31. Alternatively, the main-board bracket 30 defines an installation hole 35, and the installation hole 35 serves as the first installation region 31.

In this implementation, only a structure of the first installation region 31 is illustrated, and a structure of the second installation region 32 can be the same as that of the first installation region 31, which will not be repeatedly described here again. In this implementation, the main-board bracket 30 defines the installation groove 33 or the installation hole 35, so that the installation groove 33 or the installation hole 35 serves as the first installation region 31, and the auxiliary display screen 11 can be installed in the installation groove 33 or the installation hole 35.

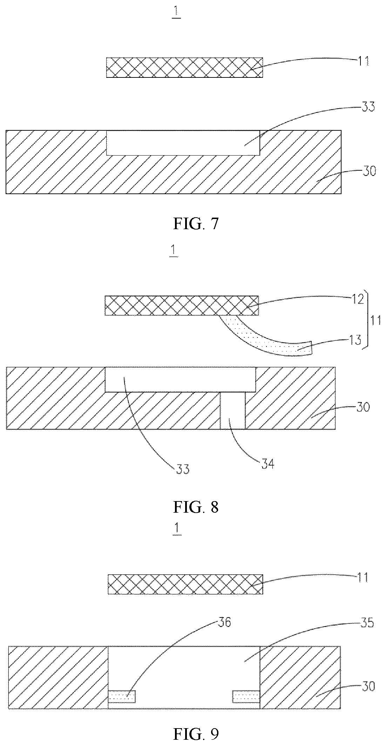

Reference is made to FIG. 7. FIG. 7 is an exploded schematic view of a main-board bracket and an auxiliary display screen provided in an implementation of the present disclosure. In this implementation, the main-board bracket 30 defines the installation groove 33, and at least part of the auxiliary display screen 11 is installed in the installation groove 33.

In one implementation of the present disclosure, when the installation groove 33 serves as the first installation region 31, at least a part of the auxiliary display screen 11 can be installed in the installation groove 33, so that the installation groove 33 can be configured to fix the auxiliary display screen 11, thereby improving connection performance between the auxiliary display screen 11 and the main-board bracket 30. In this implementation, the whole auxiliary display screen 11 is installed in the installation groove 33.

Reference is made to FIGS. 6 and 8 together. FIG. 8 is an exploded schematic view of a main-board bracket and an auxiliary display screen provided in another implementation of the present disclosure. In this implementation, the electronic device 1 further includes a main board 22 installed on the frame 20. The auxiliary display screen 11 includes an auxiliary-display-screen body 12 received in the installation groove 33, and an electrical connection portion 13 connecting with the auxiliary-display-screen body 12. The main-board bracket 30 further defines a first through-hole 34 communicating with the installation groove 33, and the electrical connection portion 13 passes through the first through-hole 34 and is electrically connected with the main board 22.

In this implementation, the electronic device 1 further includes a main board 22. The main board 22 is configured to carry various components and electrically connects various components in the electronic device 1. The main board 22 of the present disclosure is installed on the frame 20. Optionally, the main-board bracket 30 can be fixed to the frame 20 through the main board 22. Specifically, the main board 22 is placed on the frame 20, and the main-board bracket 30 is installed on the main board 22, and then the main-board bracket 30, the main board 22, and the frame 20 are connected with one another with a screw(s).

The auxiliary display screen 11 in this implementation includes an auxiliary-display-screen body 12 and an electrical connection portion 13. The auxiliary-display-screen body 12 is configured for display, and the electrical connection portion 13 is configured to electrically connect the auxiliary-display-screen body 12 with other components. In order to achieve the above purpose, in this implementation, the main-board bracket 30 defines the first through-hole 34 communicating with the installation groove 33, and the auxiliary-display-screen body 12 is received in the installation groove 33, so that the electrical connection portion 13 passes through the first through-hole 34 and is connected to the main board 22, thereby electrically connecting other components with the auxiliary-display-screen body 12 and realizing conduction of a circuit of the auxiliary display screen 11. Optionally, the electrical connection portion 13 includes, but is not limited to, a bdvanced technology bttachment (BTB) connector.

Reference is made to FIG. 9. FIG. 9 is an exploded schematic view of a main-board bracket and an auxiliary display screen provided in yet another implementation of the present disclosure. In this implementation, when the main-board bracket 30 defines the installation hole 35, a fixing portion 36 protrudes from a side wall of the installation hole 35 defined by the main-board bracket 30, and the auxiliary display screen 11 is installed on the fixing portion 36.

In another implementation of the present disclosure, when the installation hole 35 serves as the first installation region 31, the auxiliary display screen 11 can be fixed in the installation hole 35. Two specific methods for installing the auxiliary display screen 11 in the installation hole 35 are provided in the present disclosure. In one method, the fixing portion 36 protrudes from the side wall of the installation hole 35 defined by the main-board bracket 30, the fixing portion 36 can be integrated with or separated from the installation hole 35, and the fixing portion 36 only occupies a part of the installation hole 35. In this way, when the auxiliary display screen 11 is installed in the installation hole 35, the fixing portion 36 can abut against the auxiliary display screen 11, and the auxiliary display screen 11 can be fixed by the fixing portion 36, to prevent the auxiliary display screen 11 from falling off, thereby improving connection performance between the auxiliary display screen 11 and the main-board bracket 30.

In addition, when the auxiliary display screen 11 is installed in the installation hole 35, since the installation hole 35 is a through-hole, there is no need to additionally define a through-hole in the main-board bracket 30, and the electrical connection portion 13 electrically connected with the auxiliary-display-screen body 12 can directly pass through the installation hole 35 to be electrically connected with the main board 22.

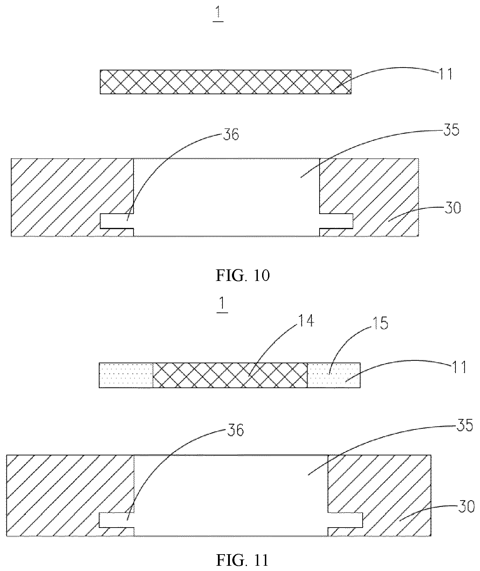

Reference is made to FIG. 10. FIG. 10 is an exploded schematic view of a main-board bracket and an auxiliary display screen provided in yet another implementation of the present disclosure. In this implementation, when the main-board bracket 30 defines the installation hole 35, a fixing groove 37 is defined in a side wall of the installation hole 35 defined by the main-board bracket 30, and part of the auxiliary display screen 11 is received in the fixing groove 37.

In another method, the fixing groove 37 is defined in the side wall of the installation hole 35, with the installation hole 35 being defined by the main-board bracket 30. The part of the auxiliary display screen 11 (i.e., an edge part of the auxiliary display screen 11) may be received in the fixing groove 37, and the auxiliary display screen 11 is fixed by the fixing groove 37 so as to prevent the auxiliary display screen 11 from falling off, thereby improving the connection performance between the auxiliary display screen 11 and the main-board bracket 30.

Reference is made to FIG. 11. FIG. 11 is an exploded schematic view of a main-board bracket and an auxiliary display screen provided in yet another implementation of the present disclosure. In this implementation, the auxiliary display screen 11 comprises a display portion 14 and a non-display portion 15 disposed around a periphery of the display portion 14, and at least part of the non-display portion 15 is received in the fixing groove 37.

In this implementation, the auxiliary display screen 11 includes a display portion 14 and a non-display portion 15. The display portion 14 is part of the auxiliary display screen 11 for display, while the non-display portion 15 is part of the auxiliary display screen 11 not for display, and the non-display portion 15 mainly includes various traces. In this implementation, at least part of the non-display portion 15 can be received in the fixing groove 37, and in this way, the non-display portion 15 is received in the fixing groove 37, which not only can fix the auxiliary display screen 11, but also does not affect display effect of the auxiliary display screen 11. In addition, when installation holes 35 have a same size, the size of the auxiliary display screen 11 can be effectively increased, thereby effectively increasing the size of the display portion 14. In this implementation, for example, only part of the non-display portion 15 is received in the fixing groove 37.

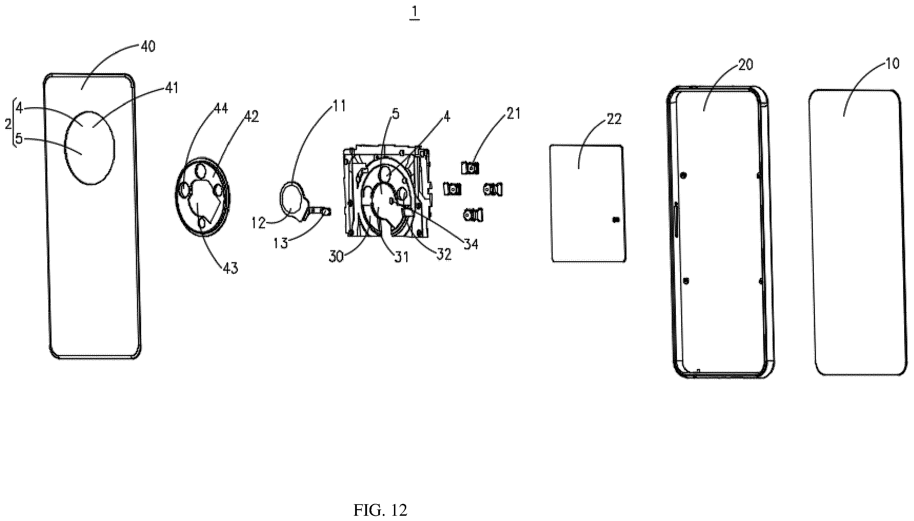

Reference is made to FIG. 12. FIG. 12 is an exploded view of an electronic device provided in another implementation of the present disclosure. In this implementation, the electronic device 1 further includes a rear housing 40 installed on the frame 20 and a camera trim piece 42. The rear housing 40 defines a second through-hole 41, the second through-hole 41 serves as the imaging region 4 and the auxiliary display region 5 connected with the imaging region 4. The camera trim piece 42 is disposed between the main-board bracket 30 and the rear housing 40. The camera trim piece 42 is disposed corresponding to the second through-hole 41, and the camera trim piece 42 defines a third through-hole 43 corresponding to the auxiliary display screen 11 and a fourth through-hole 44 corresponding to the camera 21.

The electronic device 1 may further include the rear housing 40 installed on the frame 20, and the rear housing 40 protects internal components of the electronic device 1. The rear housing 40 defines the second through-hole 41, the second through-hole 41 serves as the functional region 2, namely, the second through-hole 41 serves as the imaging region 4 and the auxiliary display region 5 connected with the imaging region 4. Remaining regions on the rear housing 40 are the appearance region 3. It can be understood that the functional region 2, the appearance region 3, the imaging region 4, and the auxiliary display region 5 described at the beginning of this document are regions on the rear housing 40, and the second through-hole 41 serves as the functional region 2, the imaging region 4, and the auxiliary display region 5, while remaining parts of the rear housing 40 are the appearance region 3.

The electronic device 1 may further include a camera trim piece 42, and the camera installation member 42 corresponds to the camera 21 and the auxiliary display screen 11 on the main-board bracket 30, and is configured to cover the camera 21 and the auxiliary display screen 11 to protect the camera 21 and the auxiliary display screen 11. The camera trim piece 42 is disposed corresponding to the second through-hole 41, and the camera 21 further defines a third through-hole 43 and a fourth through-hole 44. The third through-hole 43 corresponds to the auxiliary display screen 11 and the fourth through-hole 44 corresponds to the camera 21. As can be seen with reference to an above correspondence, the third through-hole 43 corresponds to the auxiliary display screen 11 and the auxiliary display region 5, and the fourth through-hole 44 corresponds to the camera 21 and the imaging region 4.

Optionally, the camera trim piece 42 is directly installed on the main-board bracket 30. Optionally, the camera trim piece 42 can be directly bonded to the main-board bracket 30 through a bond 54. Or, the camera trim piece 42 can be installed on the rear housing 40 firstly, and when the rear housing 40 is installed on the frame 20, the camera trim piece 42 can be installed corresponding to the main-board bracket 30.

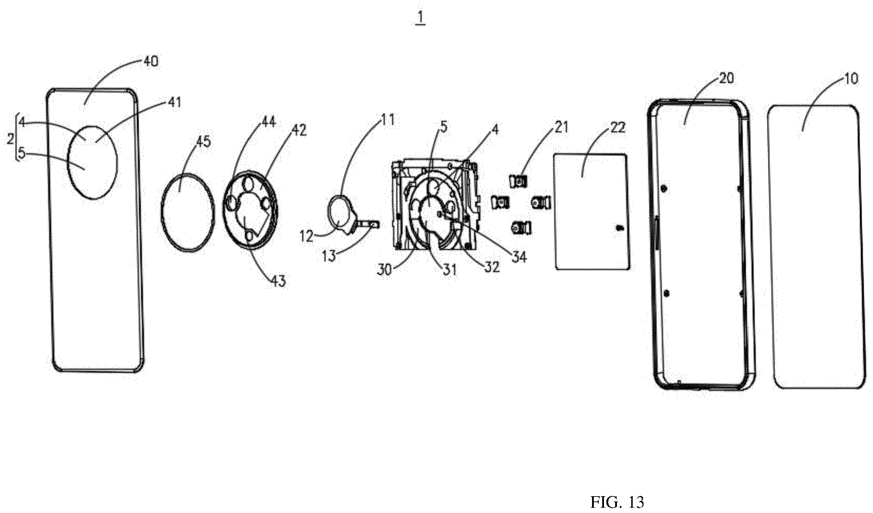

Reference is made to FIG. 13. FIG. 13 is an exploded view of an electronic device provided in yet another implementation of the present disclosure. In this implementation, the camera trim piece 42 is installed on the rear housing 40, the electronic device 1 further comprises a first seal-bond 45, and the first seal-bond 45 bonds the rear housing 40 with the camera trim piece 42.

When the camera 21 is firstly installed on the rear housing 40, the rear housing 40 and the camera trim piece 42 can be connected hermetically through the first seal-bond 45, and the first seal-bond 45 can also prevent impurities such as water or dust from entering the electronic device 1. Optionally, the first seal-bond 45 is annular, and the first seal-bond 45 is disposed corresponding to a periphery of the camera trim piece 42.

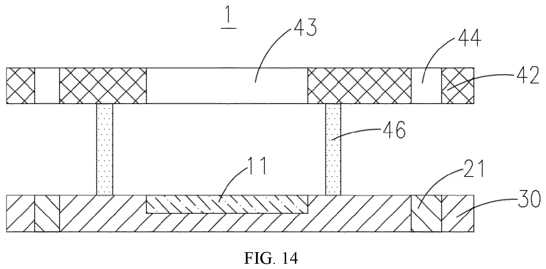

Reference is made to FIG. 14, which is a partial schematic structural view of an electronic device provided in an implementation of the present disclosure. In this implementation, the electronic device further includes a blocking portion 46 disposed between the main-board bracket 30 and the camera trim piece 42, the auxiliary display screen 11 is disposed at one side of the blocking portion 46 and the camera 21 is disposed at an opposite side of the blocking portion 46.

As can be seen from the related art, the electronic device 1 usually does not include any auxiliary display screen 11, or the auxiliary display screen 11 is away from the camera 21. Therefore, the camera 21 will not be affected by lights emitted by the auxiliary display screen 11. However, in the present disclosure, the auxiliary display region 5 is connected with the imaging region 4, that is, the auxiliary display 11 is close to the camera 21, so the light emitted by the auxiliary display 11 may be captured by the camera 21, thus affecting quality of images shot by the camera 21.

Therefore, in view of this, two solutions are provided in the present disclosure to solve the above problem. In a first solution, the electronic device additionally includes the blocking portion 46 disposed between the main-board bracket 30 and the camera trim piece 42, the auxiliary display screen 11 is disposed at one side of the blocking portion 46, and the camera 21 is disposed at an opposite side of the blocking portion 46. The blocking portion 46 can be part of the main-board bracket 30, the blocking portion 46 can be part of the camera trim piece 42, or the blocking portion 46 can be an additional structural component of the electronic device 1. In this implementation, the blocking portion 46 separates the auxiliary display screen 11 from the camera 21, which can effectively prevent the lights from being captured by the camera 21 when the auxiliary display screen 11 emits lights inside the electronic device 1, and thus prevent the quality of images shot by the camera 21 from being affected. It can be understood that in this implementation, mutual influence between the auxiliary display screen 11 and the camera 21 inside the electronic device 1 can be removed with aid of the blocking portion 46.

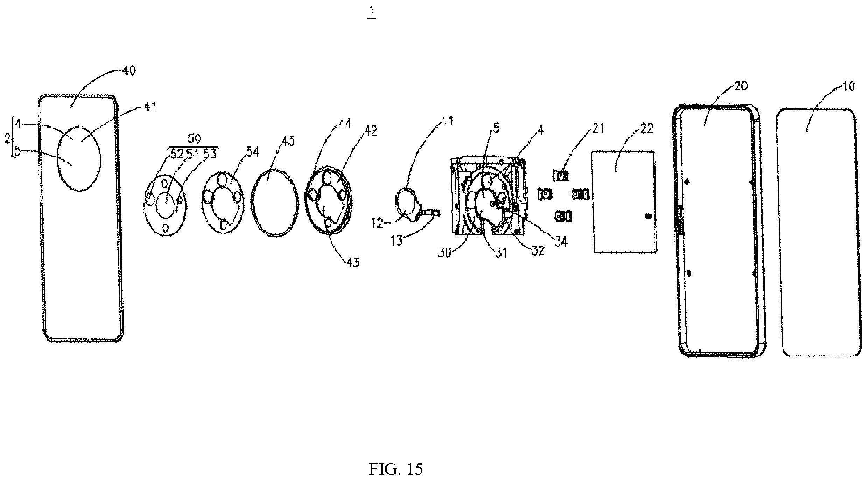

Reference is made to FIG. 15. FIG. 15 is an exploded view of an electronic device provided in yet another implementation of the present disclosure. In this implementation, the electronic device 1 further includes a lens 50 connected with the camera trim piece 42. The lens 50 comprises a first light-transmitting portion 51, a second light-transmitting portion 52, and a non-light-transmitting portion 53 connecting the first light-transmitting portion 51 with the second light-transmitting portion 52. The first light-transmitting portion 51 is disposed corresponding to the auxiliary display screen 11 and the second light-transmitting portion 52 is disposed corresponding to the camera 21.

In this implementation, the electronic device 1 may further include the lens 50 connected with the camera trim piece 42. The lens 50 is mainly used for protecting the auxiliary display screen 11 and the camera 21, and prevents external water or dust from entering the auxiliary display screen 11 and the camera 21 through the third through-hole 43 and the fourth through-hole 44. Optionally, the lens 50 can be connected with the camera trim piece 42 through the bond 54.

In addition, the lens 50 not only has a protective function, but also can control the light incident region 7 of the camera 21 and a light outlet region of the auxiliary display screen 11. Specifically, the lens 50 includes the first light-transmitting portion 51, the second light-transmitting portion 52, and the non-light-transmitting portion 53. The first light-transmitting portion 51 corresponds to the auxiliary display screen 11, and lights emitted from the auxiliary display screen 11 can be emitted to outside of the electronic device 1 through the first light-transmitting portion 51. The second light-transmitting portion 52 is disposed corresponding to the camera 21, and external lights can be emitted into the electronic device 1 through the second light-transmitting portion 52. The non-light-transmitting portion 53 is a part where lights are not allowed to enter and exit. Specifically, the above structure can be realized by disposing a light-shielding material on the lens 50.

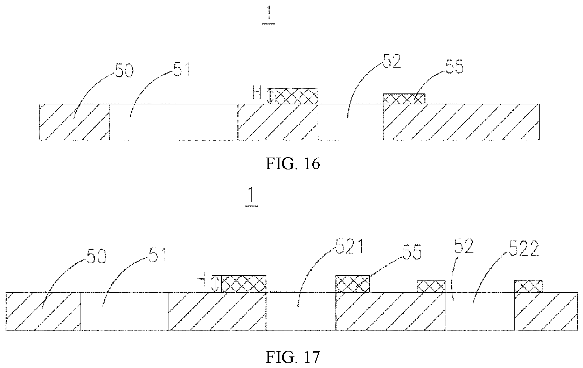

Reference is made to FIG. 16. FIG. 16 is a schematic cross-sectional view of an electronic device provided in an implementation of the present disclosure. In this implementation, the electronic device 1 further includes a light-shielding layer 55 disposed corresponding to a periphery of the second light-transmitting portion 52, the light-shielding layer 55 close to the first light-transmitting portion 51 having a thickness (a dimension represented by letter H in the figure) greater than the light-shielding 51 layer away from the first light-transmitting portion 55.

In the above, a method to improve imaging quality of the camera 21 is introduced, in which the blocking portion 46 is disposed inside the electronic device 1. In this implementation, another solution which can performed outside the electrical device will be introduced. The lens 50 of this implementation further includes a light-shielding layer 55 disposed corresponding to the periphery of the second light-transmitting portion 52. Optionally, the light-shielding layer 55 can be the above-mentioned light-shielding material or can be a light-shielding layer 55 additionally disposed on the above-mentioned light-shielding material. The light-shielding layer 55 can absorb lights at the periphery of the second light-transmitting portion 52, and prevent the lights at the periphery of the second light-transmitting portion 52 from being received by the camera 21.

The auxiliary display screen 11 is disposed at one side of the camera 21, that is, the second light-transmitting portion 52 is disposed at one side of the first light-transmitting portion 51, and for the light-shielding layer 55, part of the light-shielding layer 55 is close to the first light-transmitting portion 51, and another part of the light-shielding layers 55 is away from the first light-transmitting portion 51. Therefore, in this implementation, the light-shielding layer 55 close to the first light-transmitting portion 51 has a light shielding ratio higher than the light-shielding layer 55 away from the first light-transmitting portion 51, so that the light-shielding layer 55 close to the first light-transmitting portion 51 absorbs more lights from the auxiliary display screen 11, reduces influence of the auxiliary display screen 11 on the camera 21, and improves the image quality of the camera 21. Optionally, the light-shielding layer 55 close to the first light-transmitting portion 51 can be made to have a greater thickness than the light-shielding layer 55 away from the first light-transmitting portion 51. Alternatively, the light-shielding layer 55 close to the first light-transmitting portion 51 can be made to have a density greater than the light-shielding layer 55 away from the first light-transmitting portion 51.

Reference is made to FIG. 17. FIG. 17 is a schematic cross-sectional view of an electronic device provided in another implementation of the present disclosure. In this implementation, the second light-transmitting portion 52 includes a first light-transmitting sub-portion 521 and a second light-transmitting sub-portion 522. The first light-transmitting sub-portion 521 is closer to the first light-transmitting portion 51 than the second light-transmitting sub-portion 522. The electronic device 1 further includes a light-shielding layer 55 disposed corresponding to a periphery of the second light-transmitting portion 52, the light-shielding layer 55 corresponding to a periphery of the first light-transmitting sub-portion 521 has a thickness greater than the light-shielding layer 55 corresponding to a periphery of the second light-transmitting sub-portion 522.

The above implementation is described with respect to one second light-transmitting portion 52. When there are more than two second light-transmitting portions 52, for example, the second light-transmitting portion 52 includes the first light-transmitting sub-portion 521 and the second light-transmitting sub-portion 522, and the first light-transmitting sub-portion 521, the second light-transmitting sub-portion 522, and the second light-transmitting portion 52 are disposed in sequence, and the first light-transmitting sub-portion 521 is closer to the first light-transmitting portion 51 than the second light-transmitting sub-portion 522. Therefore, in this implementation, the light-shielding layer 55 on the first and second light-transmitting sub-portions 521 and 522 at different distances from the first light-transmitting portion 51 can be processed differently. For example, the light shielding ratio of the light-shielding layer 55 disposed corresponding to the periphery of the first light-transmitting sub-portion 521 is greater than that of the light-shielding layer 55 disposed corresponding to the periphery of the second light-transmitting sub-portion 522, so that the light-shielding layer 55 of the first light-transmitting sub-portion 521 close to the first light-transmitting portion 51 absorbs more lights from the auxiliary display screen 11, thereby reducing influence of the auxiliary display screen 11 on the camera 21, and improving the image quality of the camera 21. Optionally, a thickness of the light-shielding layer 55 disposed corresponding to the periphery of the first light-transmitting sub-portion 521 is greater than a thickness of the light-shielding layer 55 disposed corresponding to the periphery of the second light-transmitting sub-portion 522. Alternatively, a density of the light-shielding layer 55 disposed corresponding to the periphery of the first light-transmitting sub-portion 521 is greater than a density of the light-shielding layer 55 disposed corresponding to the periphery of the second light-transmitting sub-portion 522.

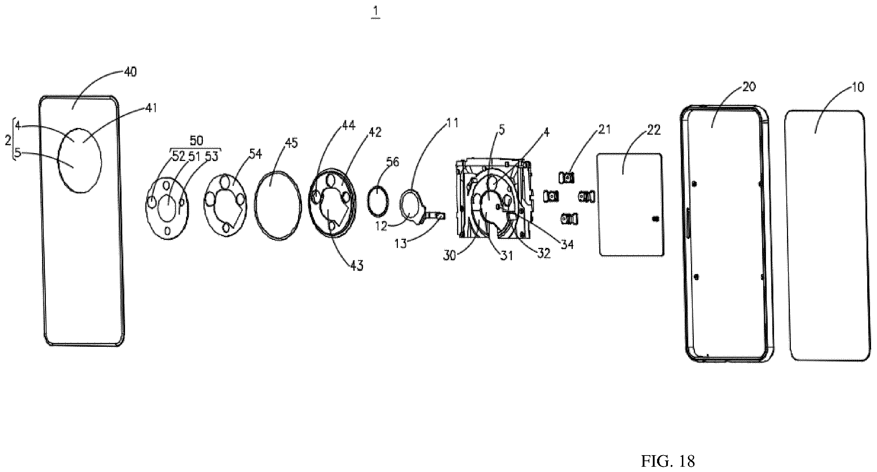

Reference is made to FIG. 18. FIG. 18 is an exploded view of an electronic device provided in yet another implementation of the present disclosure. In this implementation, the electronic device 1 further includes a second seal-bond 56. The second seal-bond 56 bonds the auxiliary display screen 11 with the lens 50.

In this implementation, the second seal-bond 56 may be disposed between the auxiliary display screen 11 and the lens 50, so that the second seal-bond 56 bonds the auxiliary display screen 11 with the lens 50. In addition, the second seal-bond 56 can also serve as secondary sealing to prevent impurities such as water or dust from entering the auxiliary display screen 11 through the third through-hole 43. Optionally, the second seal-bond 56 is annular, and the second seal-bond 56 is disposed corresponding to the non-display portion 15 of the auxiliary display screen 11, so as not to affect normal display of the display portion 14.

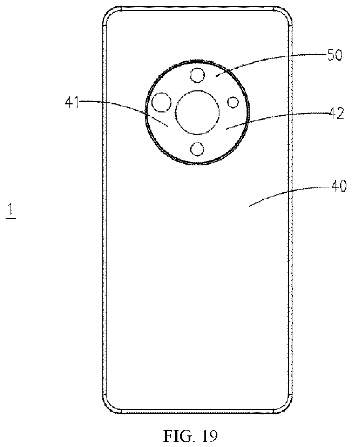

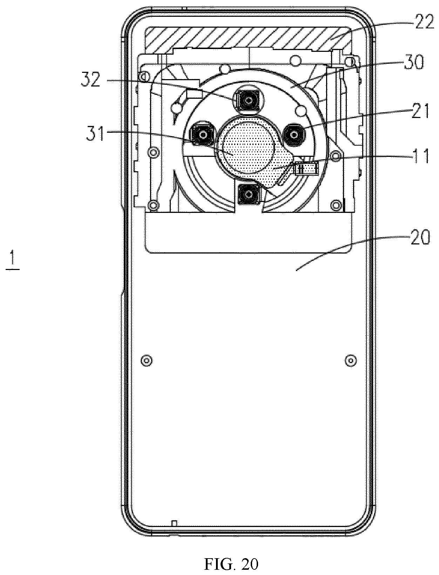

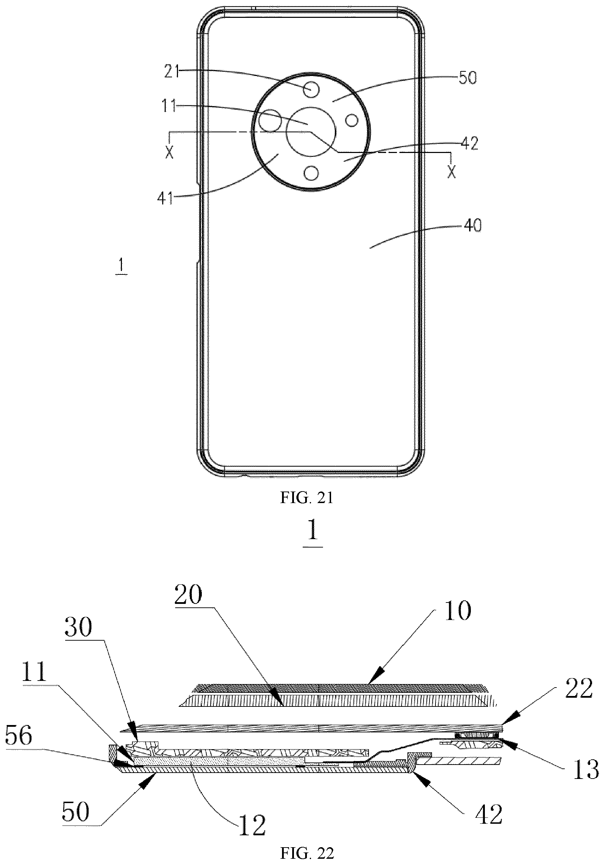

To sum up, with the camera trim piece 42 being installed on the rear housing 40, an assembly process of the whole electronic device 1 will be generally introduced in the present disclosure. Reference is made to FIGS. 19 to 22 together. FIG. 19 is a partial schematic structural view of an electronic device provided in an implementation of the present disclosure. FIG. 20 is a partial schematic structural view of an electronic device provided in another implementation of the present disclosure. FIG. 21 is an overall schematic structural view of an electronic device provided in an implementation of the present disclosure. FIG. 22 is a partial cross-sectional view taken along a X-X direction in FIG. 21.

In the present disclosure, the lens 50 can be connected with the camera trim piece 42 through the bond 54 to form a camera trim assembly. Then, the camera trim assembly is correspondingly sealed and bonded to the second through-hole 41 of the rear housing 40 through the first seal-bond 45. Assembly effect is illustrated in FIG. 19.

Then, the main display screen 10 can be installed on one side of the frame 20 and the main board 22 can be installed on the other side of the frame 20, the auxiliary display screen 11 and the camera 21 can be installed on the main-board bracket 30, and the electrical connection portion 13 of the auxiliary display screen 11 can be electrically connected with the main board 22, and then the main-board bracket 30 can be installed on the frame 20. Assembly effect is illustrated in FIG. 20, which only shows structures of some regions.

Finally, assembly of the whole device can be completed only by installing the assembled rear housing 40 on the assembled frame 20. Assembly effect is illustrated in FIGS. 21 and 22.

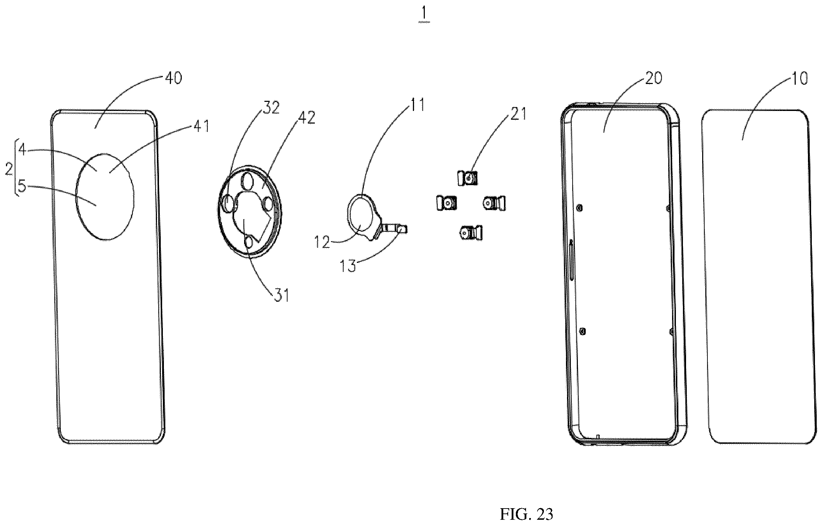

A specific structure of the electronic device 1 in one implementation of the present disclosure is introduced above, and a specific structure of the electronic device 1 in another implementation will be introduced in the following. Reference is made to FIG. 23. FIG. 23 is an exploded view of an electronic device provided in yet another implementation of the present disclosure. In this implementation, the electronic device 1 further includes a frame 20, a camera 21, a rear housing 40, and a camera trim piece 42. The camera 21 is disposed corresponding to the imaging region 4. The rear housing 40 is installed on the frame 20. The rear housing 40 defines a second through-hole 41. The second through-hole 41 serves as the imaging region 4 and the auxiliary display region 5 connected with the imaging region 4. The camera trim piece 42 is disposed between the frame 20 and the rear housing 40. The camera trim piece 42 has a first installation region 31 and a second installation region 32. The auxiliary display screen 11 is disposed in the first installation region 31, and the camera 21 is disposed in the second installation region 32.

The other implementation of the present disclosure is similar to the implementation of the present disclosure in structure. The difference lies in that while the camera trim piece 42 is required, no main-board bracket 30 is required in this implementation. The auxiliary display screen 11 and the camera 21 are directly installed on the camera trim piece 42, so that the main-board bracket 30 can be omitted, thereby reducing a thickness of the whole electronic device 1. In addition, with the main-board bracket 30 being omitted, cost and assembly time of the electronic device 1 can be also reduced, thus greatly improving assembly efficiency of the electronic device 1. Secondly, the camera trim piece 42 may also have the first installation region 31 and the second installation region 32, and specific structures of the first installation region 31 and the second installation region 32 may be the same as that of the first installation region 31 in the one implementation of the present disclosure, which will not be repeatedly described here again.

In addition, in the other implementation of the present disclosure, the electronic device 1 may further include other structural components such as the first seal-bond 45, the second seal-bond 56, the lens 50, the light-shielding layer 55, etc., and their specific structures may be the same as those in the implementation of the present disclosure, which will not be repeatedly described here again.

In addition, as for a specific installation position of the camera trim piece 42, optionally, the camera trim piece 42 is installed on the frame 20, or, the camera trim piece 42 is installed on the rear housing 40. In the present disclosure, the camera trim piece 42 can be installed on the rear housing 40 as in the above implementation. Since the main-board bracket 30 is omitted, the camera trim piece can also be directly installed on the main-board bracket 30.

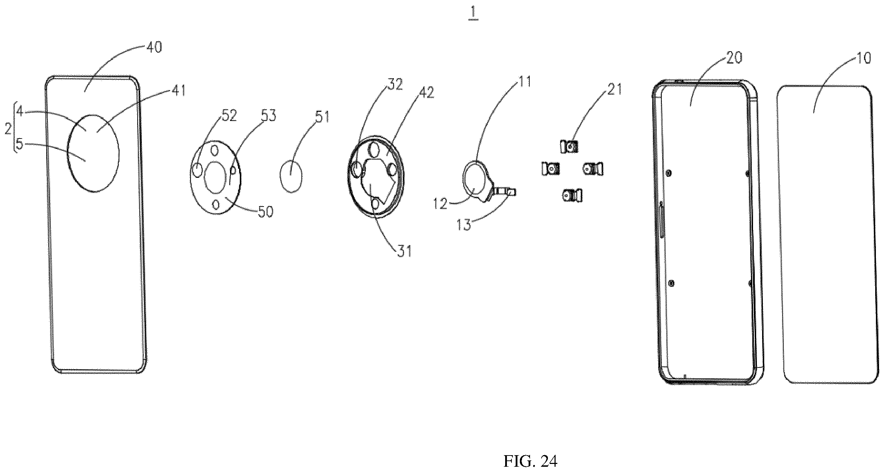

Reference is made to FIG. 24. FIG. 24 is an exploded view of an electronic device provided in yet another implementation of the present disclosure. In this implementation, the electronic device 1 further includes a lens 50 connected with the camera trim piece 42. The lens 50 includes a first light-transmitting portion 51, a second light-transmitting portion 52, and a non-light-transmitting portion 53 connecting the first light-transmitting portion 51 with the second light-transmitting portion 52. The first light-transmitting portion 51 is disposed corresponding to the auxiliary display screen 11 and the second light-transmitting portion 52 is disposed corresponding to the camera 21. The first light-transmitting portion 51 is detachably connected with the non-light-transmitting portion 53.

As can be seen from the above, when the auxiliary display screen 11 and the camera 21 are installed on the camera trim piece 42, the electronic device 1 can also be provided with the lens 50, and the lens 50 can include the first light-transmitting portion 51, the second light-transmitting portion 52, and the non-light-transmitting portion 53. In both implementations, the first light-transmitting portion 51 is detachably connected with the non-light-transmitting portion 53. It can be understood that the first light-transmitting portion 51 disposed corresponding to the auxiliary display screen 11 and the non-light-transmitting portion 53 are in a separate structure rather than an integral structure, and the first light-transmitting portion 51 can be attached and detached when necessary. Firstly, it is convenient to maintain and replace the first light-transmitting portion 51, and when the first light-transmitting portion 51 is damaged, it is not necessary to replace the whole lens 50, but only the first light-transmitting portion 51. Furthermore, the first light-transmitting portion 51 can have special structures or texture design, so as to increase patterning and functionality of the first light-transmitting portion 51.

The above is introduced by combining a virtual structure with a physical structure of the electronic device 1. In the following, the present disclosure will be described in the physical structure, which in essence, refers to the same electronic device 1.

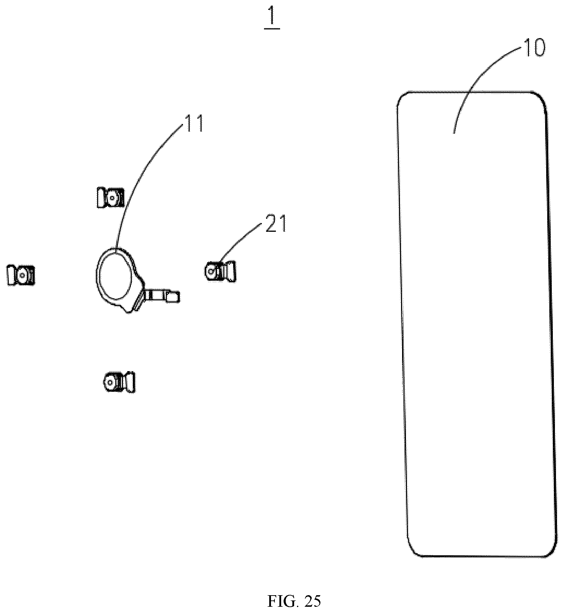

Reference is made to Figure 25. FIG. 25 is an exploded view of an electronic device provided in yet another implementation of the present disclosure. In this implementation, the electronic device 1 includes a main display screen 10, an auxiliary display screen 11, and multiple cameras 21. The auxiliary display screen 11 is disposed opposite to the main display screen 10, and the multiple cameras 21 are disposed around a periphery of the auxiliary display screen 11.

In the electronic device 1 provided in this implementation, the multiple cameras 21 are disposed around the periphery of the auxiliary display screen 11, so that the auxiliary display screen 11 can be integrated with the cameras 21, and the auxiliary display screen 11 can be better integrated with the cameras 21, thereby improving the integration of the auxiliary display screen 11 and the cameras 21. Further, especially when the auxiliary display screen 11 is in the off-state, the user is unable to clearly distinguish specific positions of the auxiliary display screen 11 and the camera 21, thus improving integrity of appearance of the electronic device 1. In addition, the auxiliary display screen 11 is disposed in an annular region defined by multiple cameras 21, which can make use of originally useless space, thus further reducing the space occupied by the auxiliary display screen 11 and the cameras 21 in the electronic device and improving the space utilization of the electronic device 1.

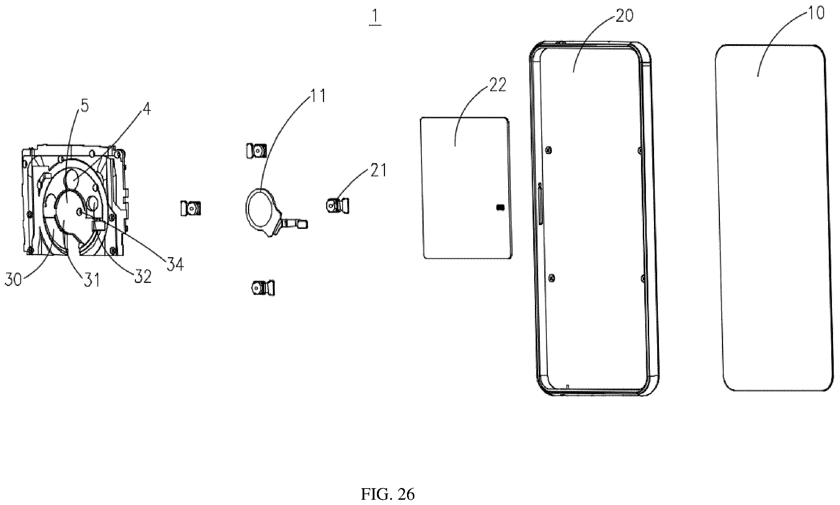

Reference is made to FIG. 26. FIG. 26 is an exploded view of an electronic device provided in yet another implementation of the present disclosure. In this implementation, the electronic device 1 further includes a frame 20, a main board 22, and a main-board bracket 30. The frame 20 supports the main display screen 10, the main board 22 and the main-board bracket 30 are disposed at one side of the frame 20 away from the main display screen 10, the main-board bracket 30 is connected with the main board 22 and the frame 20, and the auxiliary display screen 11 and the multiple cameras 21 are fixed to the main-board bracket 30.

In this implementation, a specific structure in which the auxiliary display screen 11 and the camera 21 are fixed to the main-board bracket 30 is described. The specific structure and beneficial effects of the electronic device 1 have been described in detail above in the present disclosure, which will not be repeatedly described here again.

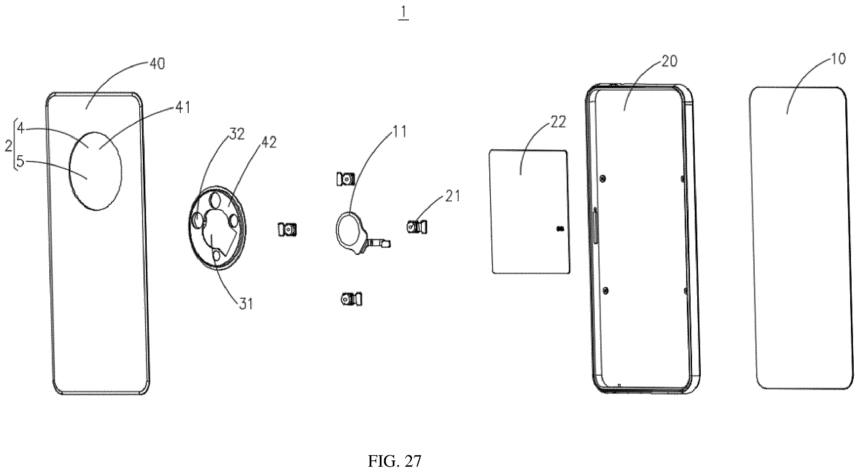

Reference is made to FIG. 27. FIG. 27 is an exploded view of an electronic device provided in yet another implementation of the present disclosure. In this implementation, the electronic device 1 further includes a frame 20, a main board 22, a camera trim piece 42, and a rear housing 40. The frame 20 supports the main display screen 10. The main board 22, the camera trim piece 42, and the rear housing 40 are disposed at one side of the frame 20 away from the main display screen 10, the main board 22 and the rear housing 40 are disposed on the frame 20, the camera trim piece is 42 disposed between the frame 20 and the rear housing 40, and the auxiliary display screen 11 and the multiple cameras 21 are fixed to the camera trim piece 42.

In this implementation, a specific structure in which the auxiliary display screen 11 and the camera 21 are fixed to the camera trim piece 42 is described. The specific structure and beneficial effects of the electronic device 1 have been described in detail above in the present disclosure, which will not be repeatedly described here again.

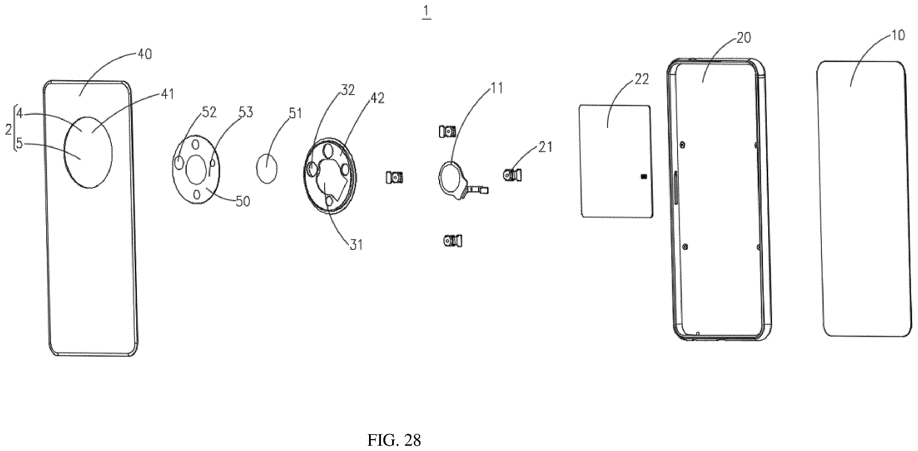

Reference is made to FIG. 28. FIG. 28 is an exploded view of an electronic device provided in yet another implementation of the present disclosure. In this implementation, the electronic device 1 further includes a lens 50 connected with the camera trim piece 42. The lens 50 comprises a first light-transmitting portion 51, a second light-transmitting portion 52, and a non-light-transmitting portion 53 connecting the first light-transmitting portion 51 with the second light-transmitting portion 52. The first light-transmitting portion 51 is disposed corresponding to the auxiliary display screen 11 and the second light-transmitting portion 52 is disposed corresponding to the camera 21. The first light-transmitting portion 51 is detachably connected with the non-light-transmitting portion 53.

In this implementation, the first light-transmitting portion 51 is detachably connected with the non-light-transmitting portion 53. The specific structure and beneficial effects of the lens 50 have been described in detail above in the present disclosure, which will not be repeatedly described here again.

As can be seen from the above, in implementations illustrated in FIGS. 25 to 28, the electronic device 1 is described only in the physical structure, which in essence is the same as the electronic device 1 in the above implementations. Therefore, the electronic device 1 illustrated in FIGS. 25 to 28 can also include same components and structures as those described above, and its specific structure will not be repeatedly described here again.

Content provided by implementations of the present disclosure has been introduced in detail in the above, and principles and implementations of the present disclosure are illustrated and explained in this document. Above explanations are only for facilitating understanding of the methods and core ideas of the present disclosure. At the same time, according to the ideas of the present disclosure, changes in specific implementations and an application scope can be made by the ordinary skilled in this art. To sum up, Content of this specification should not be construed as limitation of the present disclosure.

## Claims

1. An electronic device, wherein the electronic device has an imaging region and an auxiliary display region connected with the imaging region, the imaging region being disposed around at least a part of a periphery of the auxiliary display region; and wherein the electronic device comprises a main display screen and an auxiliary display screen disposed opposite to the main display screen, and the auxiliary display screen is disposed corresponding to the auxiliary display region.

2. The electronic device of claim 1, wherein the imaging region surrounds an accommodating region, and the auxiliary display region is disposed in the accommodating region.

3. The electronic device of claim 2, wherein the imaging region comprises a light incident region, and the light incident region and the auxiliary display region are same in shape.

4. The electronic device of claim 1, further comprising:
a frame and a camera, the camera being disposed corresponding to the imaging region; and
a main-board bracket installed on the frame, wherein the main-board bracket has a first installation region and a second installation region; and the auxiliary display screen is installed in the first installation region and the camera is installed in the second installation region.

5. The electronic device of claim 4, wherein the main-board bracket defines an installation groove, the installation groove serving as the first installation region; or, wherein the main-board bracket defines an installation hole, the installation hole serving as the first installation region.

6. The electronic device of claim 5, wherein when the main-board bracket defines the installation groove, at least part of the auxiliary display screen is installed in the installation groove.

7. The electronic device of claim 6, further comprising a main board installed on the frame, wherein the auxiliary display screen comprises an auxiliary-display-screen body received in the installation groove and an electrical connection portion connected with the auxiliary-display-screen body; and wherein the main-board bracket further defines a first through-hole communicating with the installation groove, and the electrical connection portion passes through the first through-hole and is electrically connected with the main board.

8. The electronic device of claim 5, wherein when the main-board bracket defines the installation hole, a fixing portion protrudes from a side wall of the installation hole defined by the main-board bracket, and the auxiliary display screen is installed on the fixing portion.

9. The electronic device of claim 5, wherein when the main-board bracket defines the installation hole, a fixing groove is defined in a side wall of the installation hole defined by the main-board bracket, and part of the auxiliary display screen is received in the fixing groove.

10. The electronic device of claim 9, wherein the auxiliary display screen comprises a display portion and a non-display portion disposed around a periphery of the display portion, and at least part of the non-display portion is received in the fixing groove.

11. The electronic device of claim 4, further comprising:
a rear housing installed on the frame, wherein the rear housing defines a second through-hole, the second through-hole serving as the imaging region and the auxiliary display region connected with the imaging region; and
a camera trim piece disposed between the main-board bracket and the rear housing, wherein the camera trim piece is disposed corresponding to the second through-hole, and the camera trim piece defines a third through-hole corresponding to the auxiliary display screen and a fourth through-hole corresponding to the camera.

12. The electronic device of claim 11, wherein the camera trim piece is installed on the main-board bracket; or, the camera trim piece is installed on the rear housing.

13. The electronic device of claim 12, wherein when the camera trim piece is installed on the rear housing, the electronic device further comprises a first seal-bond, the first seal-bond bonding the rear housing with the camera trim piece.

14. The electronic device of claim 11, further comprising a blocking portion disposed between the main-board bracket and the camera trim piece, the auxiliary display screen being disposed at one side of the blocking portion and the camera being disposed at an opposite side of the blocking portion.

15. The electronic device of claim 11, further comprising:
a lens connected with the camera trim piece, wherein the lens comprises a first light-transmitting portion, a second light-transmitting portion, and a non-light-transmitting portion connecting the first light-transmitting portion with the second light-transmitting portion, the first light-transmitting portion being disposed corresponding to the auxiliary display screen and the second light-transmitting portion being disposed corresponding to the camera.

16. The electronic device of claim 15, further comprising:
a light-shielding layer disposed corresponding to a periphery of the second light-transmitting portion, the light-shielding layer close to the first light-transmitting portion having a thickness greater than the light-shielding layer away from the first light-transmitting portion.

17. The electronic device of claim 15, wherein the second light-transmitting portion comprises a first light-transmitting sub-portion and a second light-transmitting sub-portion, the first light-transmitting sub-portion being closer to the first light-transmitting portion than the second light-transmitting sub-portion; and wherein the electronic device further comprises a light-shielding layer disposed corresponding to a periphery of the second light-transmitting portion, the light-shielding layer corresponding to a periphery of the first light-transmitting sub-portion having a thickness greater than the light-shielding layer corresponding to a periphery of the second light-transmitting sub-portion.

18. The electronic device of claim 15, further comprising:
a second seal-bond, the second seal-bond bonding the auxiliary display screen with the lens.

19. The electronic device of claim 4, further comprising:
a frame and a camera, the camera being disposed corresponding to the imaging region;
a rear housing installed on the frame, wherein the rear housing defines a second through-hole, the second through-hole serving as the imaging region and the auxiliary display region connected with the imaging region; and
a camera trim piece disposed between the frame and the rear housing, wherein the camera trim piece has a first installation region and a second installation region; the auxiliary display screen is disposed in the first installation region, and the camera is disposed in the second installation region.

20. The electronic device of claim 19, wherein the camera trim piece is installed on the frame; or, the camera trim piece is installed on the rear housing.

21. The electronic device of claim 15 or 19, further comprising:
a lens connected with the camera trim piece, wherein the lens comprises a first light-transmitting portion, a second light-transmitting portion, and a non-light-transmitting portion connecting the first light-transmitting portion with the second light-transmitting portion; and the first light-transmitting portion is disposed corresponding to the auxiliary display screen, the second light-transmitting portion is disposed corresponding to the camera, and the first light-transmitting portion is detachably connected with the non-light-transmitting portion.

22. An electronic device, comprising a main display screen, an auxiliary display screen, and a plurality of cameras, wherein the auxiliary display screen is disposed opposite to the main display screen, and the plurality of cameras are disposed around a periphery of the auxiliary display screen.

23. The electronic device of claim 22, further comprising:
a frame, a main board, and a main-board bracket, wherein the frame supports the main display screen, the main board and the main-board bracket are disposed at one side of the frame away from the main display screen, the main-board bracket is connected with the main board and the frame, and the auxiliary display screen and the plurality of cameras are fixed to the main-board bracket.

24. The electronic device of claim 22, further comprising:
a frame, a main board, a camera trim piece, and a rear housing, wherein the frame supports the main display screen; and the main board, the camera trim piece, and the rear housing are disposed at one side of the frame away from the main display screen, the main board and the rear housing are disposed on the frame, the camera trim piece is disposed between the frame and the rear housing, and the auxiliary display screen and the plurality of cameras are fixed to the camera trim piece.

25. The electronic device of claim 24, further comprising:
a lens connected with the camera trim piece, wherein the lens comprises a first light-transmitting portion, a second light-transmitting portion, and a non-light-transmitting portion connecting the first light-transmitting portion with the second light-transmitting portion; and wherein the first light-transmitting portion is disposed corresponding to the auxiliary display screen, the second light-transmitting portion is disposed corresponding to the camera, and the first light-transmitting portion is detachably connected with the non-light-transmitting portion.
